# EUROPÄISCHE PATENTANMELDUNG

(11) **EP 3 139 603 A1**
(43) Veröffentlichungstag der Anmeldung: **08.03.2017**
(21) Anmeldenummer: 15183604.6
(22) Anmeldetag: 03.09.2015
(51) Int. Cl.: H04N 13/02

(54) **SYSTEM UND VERFAHREN ZUR HERSTELLUNG UND ABGABE STEREOSKOPISCHER VIDEOFILME**

(71) Anmelder: Visual Vertigo Software Technologies GmbH, 1230 Wien (AT)
(72) Erfinder: Kleszcz, Alexander, 43300 Bielsko Biala (PL)
(74) Vertreter: Schwarz & Partner

(57) **Zusammenfassung**

System (1) zur Abgabe eines stereoskopischen Videofilms (2), wobei das System (1) eine Datenverarbeitungseinheit (3) aufweist, die zum Empfangen und zur Verarbeitung von einem monoskopischen Videofilm (7) und zur Abgabe des stereoskopischen Videofilms (2), und die zum Empfangen oder zum Ermitteln einer dem monoskopischen Videofilm (7) zuzuordnenden Bewegungsinformation (14), und die zum Erstellen des stereoskopischen Videofilms (2) aus zwei inhaltlich identischen, zeitlich zueinander verzögerten, monoskopischen Videofilmen ausgebildet ist. Der monoskopische Videofilm (7) wurde mit einem eine optische Achse (17) aufweisenden Einzelobjektiv (8) eines Videoaufnahmegeräts (4) des Systems (1) aufgenommenen.

Die Datenverarbeitungseinheit (3) ist bei festgestellter Parallelität der Richtung der optischen Achse (17) des Einzelobjektivs (8) mit der Bewegungsrichtung (27) zum Ansteuern von Drehmitteln (28) des Systems (1) ausgebildet, die zur Drehung der optische Achse (17) des Einzelobjektivs (8) in einer Bewegungsebene (18) um eine Drehachse (19) gegen den Uhrzeigersinn oder im Uhrzeigersinn ausgebildet sind, bis die Parallelität nicht mehr gegeben ist.

## Beschreibung

Die Erfindung betrifft ein System zur Abgabe eines stereoskopischen Videofilms, wobei das System eine Datenverarbeitungseinheit aufweist, die zum Empfangen und zur Verarbeitung von einem monoskopischen Videofilm und zur Abgabe des stereoskopischen Videofilms, und die zum Empfangen oder zum Ermitteln einer dem monoskopischen Videofilm zuzuordnenden Bewegungsinformation, und die zum Erstellen des stereoskopischen Videofilms aus zwei inhaltlich identischen, zeitlich zueinander verzögerten, monoskopischen Videofilmen ausgebildet ist, wobei der monoskopische Videofilm mit einem eine optische Achse aufweisenden Einzelobjektiv eines Videoaufnahmegeräts des Systems aufgenommenen wurde, und wobei die Bewegungsinformation eine Bewegungsrichtung des Videoaufnahmegeräts relativ zu einem gefilmten Objekt während einer Abfolge von zumindest zwei aufeinanderfolgenden Frames des monoskopischen Videofilms kennzeichnet.

Die Erfindung betrifft weiters ein Verfahren zur Herstellung und Wiedergabe eines stereoskopischen Videofilms aus einem, mit einem Videoaufnahmegerät, aufweisend ein durch Drehmittel drehbares Einzelobjektiv mit einer optischen Achse, aufgenommenen, monoskopischen Videofilm, wobei eine Bewegungsinformation eine Bewegungsrichtung des Videoaufnahmegeräts relativ zu einem gefilmten Objekt während einer Abfolge von zumindest zwei aufeinanderfolgenden Frames des monoskopischen Videofilms kennzeichnet.

Nach dem Stand der Technik liegt der Schwerpunkt der aktuellen Anzeigetechnologie, wie sie beispielsweise bei Fernsehgeräten, Computerbildschirmen oder in tragbaren Smartphones oder Tablet-Computern zum Einsatz kommt, auf der zweidimensionalen oder monoskopischen Darstellung. Jedoch basiert das menschliche Sehvermögen auf dem räumlichen oder stereoskopischen Sehen. Um stereoskopische Bilder wiedergeben zu können, bedient man sich der Stereovision, also Bildpaaren mit Tiefeneindruck, die aus jeweils einem Bild für jedes der beiden Augen bestehen, und der Bewegungsparallaxe, welche die Darstellung der Position verschiedener Objekte im Raum durch Bildfolgen eines bewegten Beobachters ermöglicht. Stereoskopische Bilder oder Videofilme bestehen deshalb aus zwei zweidimensionalen Bildern, jeweils für eines der beiden Augen des Betrachters. Das menschliche Gehirn empfängt diese zwei unterschiedlichen Bilder und generiert daraus die räumliche Struktur des Bildes oder Videofilms.

Herkömmliche Verfahren zur Erzeugung von stereoskopischen Bildern nutzen eine Kamera, um mehrere Multifokus-Aufnahmen eines Objekts zu machen und daraus ein stereoskopisches Bild zu generieren. Dabei wird mittels einer Datenverarbeitungseinheit, die mehrere komplexe Algorithmen und Renderings auszuführen hat aus den verschiedenen Aufnahmen ein stereoskopisches Bild, bestehend aus einem Bild für das linke Auge und einem Bild für das Rechte Auge des Betrachters, erstellt, welches über eine stereoskopische Anzeigeeinheit darstellbar ist. Bei stereoskopischen Videofilmen muss dies entsprechend für jeden Frame des monoskopischen Videofilms durchgeführt werden, was sehr hohe Anforderungen an sowohl Rechenleistung der Datenverarbeitungseinheit als auch den nötigen Speicherplatz für die empfangenen und generierten Daten stellt. Ist eine Übertragung und Herstellung des stereoskopischen Videofilms in Echtzeit gewünscht, so ist dies mit den herkömmlichen Verfahren nicht praktikabel.

Das Dokument mit der Anmeldenummer EP 15164966.2 offenbart ein System und ein zugehöriges Verfahren zur Herstellung und Ausgabe stereoskopischer Bilder und Videofilme, bei dem die Anforderung an die Leistungsfähigkeit der Datenverarbeitungseinheit sowie die für die Erzeugung des stereoskopischen Videos benötigte Zeit deutlich verringert sind. Dies ermöglicht eine Übertragung und Herstellung eines stereoskopischen Videofilms im Wesentlichen in Echtzeit. Das offenbarte System nutzt eine Datenverarbeitungseinheit, die einem aufgenommenen monoskopischen Videofilm die Bewegungsrichtung eines Videoaufnahmegeräts relativ zu einem gefilmten Objekt zuordnet, und entsprechend dieser Bewegungsrichtung zwei inhaltlich identische aber zeitlich zueinander verzögerte monoskopische Videofilme abgibt, die den stereoskopischen Videofilm, jeweils einer für eines der beiden Augen des Betrachters, darstellen.

Eine Einschränkung ist bei dem bekannten System insofern gegeben, dass, beim ausschließlichen Vorliegen einer Bewegungsrichtung des Videoaufnahmegeräts relativ zu dem gefilmten Objekt in Richtung der optischen Achse des Einzelobjektivs, also wenn sich das Videoaufnahmegerät ohne anteilige Seitwärtsbewegung direkt auf das gefilmte Objekt zu oder von dem Objekt weg bewegt, nur die linke Hälfte oder nur die rechte Hälfte der Frames des monoskopischen Videofilms zum Erstellen des stereoskopischen Videofilms herangezogen werden kann.

Der Erfindung liegt die Aufgabe zugrunde, ein System und ein zugehöriges Verfahren zur Herstellung und Ausgabe stereoskopischer Videofilme zu schaffen, bei dem die vorstehende Einschränkung nicht auftritt.

Erfindungsgemäß wird diese Aufgabenstellung bei einem System dadurch gelöst, dass die Datenverarbeitungseinheit bei festgestellter Parallelität der Richtung der optischen Achse des Einzelobjektivs mit der Bewegungsrichtung zum Ansteuern von Drehmitteln des Systems ausgebildet ist, die zur Drehung der optische Achse des Einzelobjektivs in einer Bewegungsebene um eine Drehachse gegen den Uhrzeigersinn oder im Uhrzeigersinn ausgebildet sind, bis die Parallelität nicht mehr gegeben ist.

Erfindungsgemäß wird diese Aufgabenstellung bei einem Verfahren dadurch gelöst, dass folgende Verfahrensschritte durchgeführt werden:
A) Empfangen des monoskopischen Videofilms;
B) Ermitteln einer dem monoskopischen Videofilm zuzuordnenden Bewegungsinformation, die eine Bewegungsrichtung des Videoaufnahmegeräts relativ zu einem gefilmten Objekt während einer Abfolge von zumindest zwei aufeinanderfolgenden Frames des monoskopischen Videofilms kennzeichnet;
C) Bei Festgestellter Parallelität der Richtung der optischen Achse des Einzelobjektivs mit der Bewegungsrichtung des Videoaufnahmegeräts, Ansteuern der Drehmittel zur Drehung der optischen Achse des Einzelobjektivs in einer Bewegungsebene um eine Drehachse gegen den Uhrzeigersinn oder im Uhrzeigersinn, bis die Parallelität nicht mehr gegeben ist;
D) Erstellen zweier, inhaltlich identischer, monoskopischer Videofilme des abzugebenden stereoskopischen Videofilms aus dem monoskopischen Videofilm;
E) Verzögern eines der beiden monoskopischen Videofilme des abzugebenden stereoskopischen Videofilms;
F) Abgabe des in den Verfahrensschritten A)-E) hergestellten stereoskopischen Videofilms an eine stereoskopische Anzeigeeinheit.

Hierdurch ist der Vorteil erhalten, dass der stereoskopische Videofilm im Wesentlichen in Echtzeit direkt aus dem monoskopischen Videofilm erstellt werden kann, der mit dem, nur ein Einzelobjektiv aufweisenden, Videoaufnahmegerät aufgenommen wurde, ohne dabei die Frames des monoskopischen Videofilms auf nur ihre linke Hälfte oder nur ihre rechte Hälfte zuzuschneiden.

Das System benötigt in einer erfindungsgemäßen Ausführung zur Herstellung und Abgabe des stereoskopischen Videofilms aus dem monoskopischen Videofilm ausschließlich die Bildinformation des monoskopischen Videofilms. Aus dieser kann es die dem monoskopischen Videofilm zuzuordnende Bewegungsinformation, die aus der Bewegungsrichtung des Videoaufnahmegeräts in Relation zu dem gefilmten Objekt besteht, ermitteln.

In einer vorteilhaften Ausführung ermittelt die Datenverarbeitungseinheit die dem monoskopischen Videofilm zuzuordnende Bewegungsinformation im Wesentlichen in Echtzeit, und kann so die Ausrichtung der optischen Achse des Einzelobjektivs im Wesentlichen in Echtzeit anpassen. Hierdurch ist der Vorteil erhalten, dass die Datenverarbeitungseinheit den stereoskopischen Videofilm im Wesentlichen in Echtzeit an die stereoskopische Anzeigeeinheit abgeben kann, wodurch der Betrachter den stereoskopischen Videofilm im Wesentlichen in Echtzeit betrachten kann.

Bei der Ermittlung des stereoskopischen Videofilms unterscheidet die Datenverarbeitungseinheit in eine erste und eine zweite Verarbeitung. Ist die Drehung der optische Achse des Einzelobjektivs möglich, wählt die Datenverarbeitungseinheit vorteilhafterweise die erste Verarbeitung aus. Gegebenenfalls kann die Datenverarbeitungseinheit die Drehmittel derart ansteuern, dass diese die Drehung der optische Achse des Einzelobjektivs in der Bewegungsebene um die Drehachse gegen den Uhrzeigersinn oder im Uhrzeigersinn bereits vor der Aufnahme des monoskopischen Videofilms durch das Videoaufnahmegerät, beziehungsweise unabhängig von einer etwaigen Bewegungsrichtung des Videoaufnahmegeräts, durchführen. So kann die Datenverarbeitungseinheit jedenfalls die erste Verarbeitung zur Ermittlung des stereoskopischen Videofilms durchführen.

Ist die Drehung der optische Achse des Einzelobjektivs nicht möglich, beispielsweise aufgrund einer Fehlfunktion, oder nicht gewünscht, wählt die Datenverarbeitungseinheit vorteilhafterweise die zweite Verarbeitung aus. Die beiden unterschiedlichen Verarbeitungen ermöglichen dem System, während einer Bewegung relativ zu einem oder mehreren Objekten, wobei eines als Referenzobjekt ausgewählt wird, zu jedem Zeitpunkt einen stereoskopischen Effekt, und folglich den stereoskopischen Videofilm, zu erstellen. Dabei benutzt die Datenverarbeitungseinheit bei der ersten Verarbeitung sowie bei der zweiten Verarbeitung jeweils die vollständigen Frames des monoskopischen Videofilms. Als vollständig wird in diesem Zusammenhang verstanden, dass im Wesentlichen der gesamte Bildinhalt der Frames verwendet wird.

In einer weiteren vorteilhaften Ausführung des Systems lässt sich manuell von einem Benutzer steuern, um welchen Betrag der entsprechende monoskopischen Videofilm für das linke Auge oder das rechte Auge des Betrachters des stereoskopischen Videofilms von der Datenverarbeitungseinheit verzögert abgegeben wird, um den stereoskopischen Effekt in individueller Weise verstärkt oder abgeschwächt zu ermöglichen. Die Wahl welcher monoskopische Videofilm verzögert wird, kann anhand der Drehung der optischen Achse des Einzelobjektivs gegen den Uhrzeigersinn oder im Uhrzeigersinn, getroffen werden.

In einer vorteilhaften Ausführung des Systems ist das Videoaufnahmegerät an einem drehbaren 3-Achsenstabilisator befestigt. Der drehbare 3-Achsenstabilisator dient zum Drehen der optischen Achse um die Drehachse und zum Stabilisieren des Videoaufnahmegeräts während der Aufnahme des monoskopischen Videofilms. Dadurch wird ein "verwackeln" der Aufnahme verhindert und ein stereoskopischer Effekt optimal ermöglicht.

Ist dieser drehbare 3-Achsenstabilisator als tragbarer drehbarer 3-Achsenstabilisator ausgebildet, kann das Videoaufnahmegerät während der Aufnahme des monoskopischen Videofilms manuell geführt werden.

Besitzt das System keinen 3-Achsenstabilisator kann, mittels Korrektur des aufgenommenen monoskopischen Videofilms durch die Datenverarbeitungseinheit, eine eventuell "verwackelte" Aufnahme korrigiert werden.

In einer vorteilhaften Ausführung des Systems ist ein autonomes, unbemanntes Transportmittel, vorzugsweise eine Drohne, zur Aufnahme und zur Führung des Videoaufnahmegeräts vorgesehen. Im Fall der Drohne weist diese beispielsweise den 3-Achsenstabilisator, an dem das Videoaufnahmegerät befestigt ist, und ein GPS-Modul auf. Somit kann der von dem Videoaufnahmegerät aufgenommene monoskopische Videofilm im Wesentlichen in Echtzeit an die Datenverarbeitungseinheit übermittelt und die optische Achse entsprechend gedreht werden.

Ist das Videoaufnahmegerät beispielsweise fest mit der Drohne verbunden, das heißt die optische Achse ist nicht um die Drehachse drehbar, so kann vorteilhafterweise die Drohne, unter Beibehaltung ihrer Flugrichtung, um ihre eigene Rotationsachse gedreht werden. Dies führt, unter Beibehaltung der Bewegungsrichtung des Einzelobjektivs, zu einer Drehung der optischen Achse des Einzelobjektivs in der Bewegungsebene, wobei die Drohne das Drehmittel bildet.

In einer vorteilhaften Ausführung ist die Datenverarbeitungseinheit Teil eines mobilen Telekommunikationsgeräts, beispielsweise eines Smartphones, oder eines mobilen Tablet-Computers. In Kombination mit der stereoskopischen Anzeigeeinheit, die beispielsweise aus einem Bildschirm des Geräts und einer Virtual-Reality 3D-Brille besteht, können so monoskopische Videos, die mit einem, nur ein Einzelobjektiv aufweisenden, Videoaufnahmegerät, das von einer Drohne bewegt wird, aufgenommenen wurden, in Echtzeit als stereoskopisches Video betrachtet werden.

Ist in einer weiteren vorteilhaften Ausführung ist auch das Videoaufnahmegerät Teil des mobilen Telekommunikationsgeräts, und der tragbare drehbare 3-Achsenstabilisator dient zur Aufnahme und zur manuellen Führung des Telekommunikationsgeräts während der Aufnahme des monoskopischen Videofilms. So können monoskopische Videos, die mit einem manuell geführten mobilen Telekommunikationsgerät, beispielsweise einem Smartphone, aufgenommen werden, im Wesentlichen in Echtzeit als stereoskopisches Video betrachtet werden.

Weitere vorteilhafte Ausgestaltungen des erfindungsgemäßen Systems werden im Folgenden anhand der Figuren näher erläutert.
Figur 1 zeigt ein Blockschaltbild eines Systems zur Abgabe eines stereoskopischen Videofilms gemäß einem ersten Ausführungsbeispiel der Erfindung.
Figur 2 zeigt ein Ablaufdiagramm eines Verfahrens zur Abgabe eines stereoskopischen Videofilms gemäß der Erfindung.
Figur 3 zeigt eine erste Verarbeitung des Systems zur Abgabe des stereoskopischen Videofilms.
Figur 4 zeigt eine zweite Verarbeitung des Systems zur Abgabe des stereoskopischen Videofilms.
Figur 5 zeigt ein Blockschaltbild eines Systems zur Abgabe eines stereoskopischen Videofilms gemäß einem weiteren Ausführungsbeispiel der Erfindung.
Figur 6 zeigt in einer schematischen Darstellung einen Verfahrensschritt C der ersten Verarbeitung des Systems zur Abgabe des stereoskopischen Videofilms gemäß einem weiteren Ausführungsbeispiel der Erfindung.

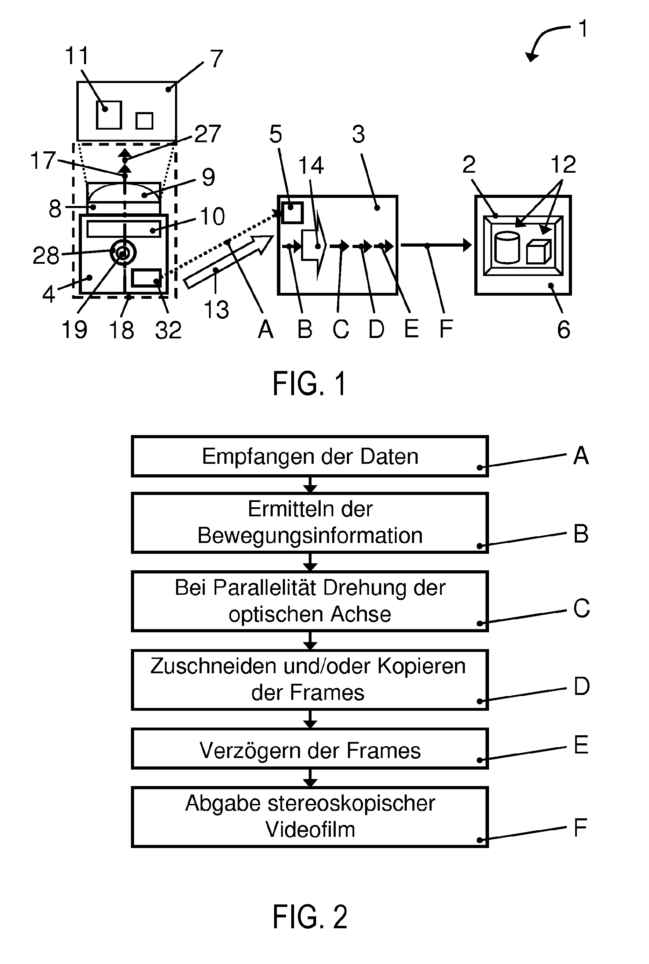

Figur 1 zeigt ein Blockschaltbild eines Systems 1 zur Abgabe eines stereoskopischen Videofilms 2, wobei das System 1 im vorliegenden Ausführungsbeispiel im Wesentlichen eine Datenverarbeitungseinheit 3, ein Videoaufnahmegerät 4 und eine stereoskopische Anzeigeeinheit 6 aufweist. Das Videoaufnahmegerät 4 ist eine digitale Kamera und nimmt entlang einer optischen Achse 17, mittels einer optischen Linse 9, die sich in einem Einzelobjektiv 8 befindet, sowie mittels einem Bildsensor 10 den monoskopischen Videofilm 7 auf.

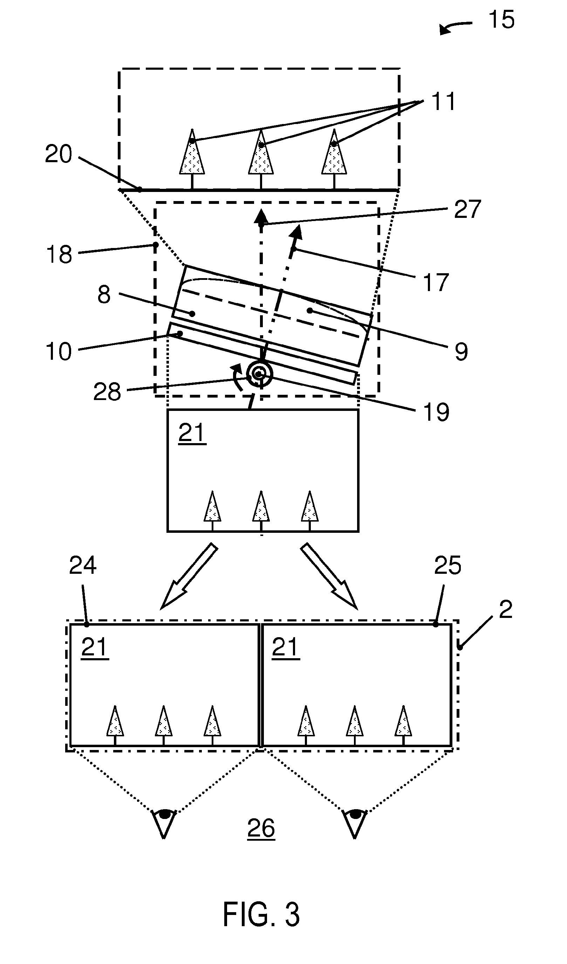

Das Videoaufnahmegerät 4 und das Einzelobjektiv 8, beziehungsweise nur das Einzelobjektiv 8, sind mittels Drehmittel 28 um eine Drehachse 19 im Uhrzeigersinn beziehungsweise gegen den Uhrzeigersinn drehbar. Die Drehachse 19 bildet die Normahichtung, beziehungsweise den Normalvektor einer Bewegungsebene 18 aus, und steht normal auf die optische Achse 17 des Einzelobjektivs 8. Die optische Achse 17 des Einzelobjektivs 8 liegt in der Bewegungsebene 18, die in Figur 1 parallel zur, beziehungsweise "in der", Zeichenebene liegt. Die Bewegungsebene 18 ist, unabhängig von der Ausrichtung des Videoaufnahmegerätes 4, beziehungsweise der optischen Achse 17 des Einzelobjektivs 8, im dreidimensionalen Raum, immer parallel zu einer Unterkante 20 des Bildsensors 10. Diese Unterkante 20 ist in den Figuren 1, 3 und 4 anhand eines vom Bildsensor 10 aufgenommenen Bildes dargestellt. Die Drehachse 19 ist demnach parallel zum Bildsensor 10. Im Folgenden wird aus Gründen der Übersichtlichkeit nur auf die Drehung der optischen Achse 17 verwiesen, wobei aus denselben Gründen auch in den Figuren 3 bis 6 auf die schematische Darstellung und Bezeichnung des Videoaufnahmegeräts 4 verzichtet wird.

Ein von dem Videoaufnahmegerät 4 aufgenommenes Bild entspricht einem einzelnen aufgenommenen Frame 21 des monoskopischen Videofilms 7, der sich aus einer zeitlichen Abfolge von Frames 21 zusammensetzt. Befindet sich das Videoaufnahmegerät 4 während einer Abfolge von zumindest zwei aufeinanderfolgenden Frames 21 des aufgenommenen monoskopischen Videofilms 7 in Bewegung relativ zu zumindest einem gefilmten Objekt 11, kann daraus der stereoskopische Videofilm 2 erstellt werden. Die Bewegung des Videoaufnahmegeräts 4 sollte sich dabei zu jedem Zeitpunkt in einer stabilisierten Situation befinden, um einen stereoskopischen Effekt 12 des stereoskopischen Videofilms 2 optimal zu ermöglichen. Der aufgenommene monoskopische Videofilm 7 sollte also zu keinem Zeitpunkt "verwackelt" sein, da sonst auch der stereoskopischen Videofilm 2 "verwackelt" abgegeben wird, und der stereoskopische Effekt 12 vermindert wird.

Befindet sich das Videoaufnahmegerät 4 während einer Abfolge von zumindest zwei aufeinanderfolgenden Frames 21 des aufgenommenen monoskopischen Videofilms 7 nicht in Bewegung relativ zu zumindest einem gefilmten Objekt 11, kann daraus der stereoskopische Videofilm 2 nicht erstellt werden, und es wird während dieser Zeitspanne der monoskopische Videofilm 7 anstelle des stereoskopischen Videofilms 2 abgegeben.

Es kann erwähnt werden, dass das Gehirn eines Betrachters 26 beim Ansehen des stereoskopischen Videofilms 2 für die Dauer von bis zu einigen Sekunden zu täuschen ist. So ist es möglich, dass der Betrachter 26 einen einige Sekunden andauernden monoskopischen Videofilm 7, der innerhalb des stereoskopischen Videofilms 2 abgespielt wird, als stereoskopischen Videofilm 2, wahrnimmt.

Eine Bildinformation 13 des monoskopischen Videofilms 7 wird während einem Verfahrensschritt A, der wie die nachfolgenden Verfahrensschritte B bis F in Figur 2 dargestellt ist, über eine Datenkommunikationseinheit 32 mittels drahtloser Übertragung an die Datenverarbeitungseinheit 3, die einen entsprechenden Empfänger 5 aufweist, gesendet. Im Rahmen der Funkreichweite der Datenkommunikationseinheit 32 werden die Daten im Wesentlichen in Echtzeit an die Datenverarbeitungseinheit 3 übertragen.

Aus der empfangenen Bildinformation 13 ermittelt die Datenverarbeitungseinheit 3 in Verfahrensschritt B eine dem monoskopischen Videofilm 7 zu diesem Zeitpunkt zuzuordnende Bewegungsinformation 14. Diese Bewegungsinformation 14 entspricht dabei einer Bewegungsrichtung 27 des Videoaufnahmegeräts 4 relativ zu dem gefilmten Objekt 11, das von einem Videoanalyseprogramm als Referenzobjekt gewählt wird. Das Videoanalyseprogramm markiert das Referenzobjekt mit einem Punkt, und ermittelt die zeitliche Veränderung der Bewegung dieses Punktes. Wird das Referenzobjekt beispielsweise größer, bewegt sich das Videoaufnahmegerät 4 auf das Referenzobjekt zu, und umgekehrt. Verschiebt sich der Punkt von rechts nach links, bewegt sich das Videoaufnahmegerät 4 relativ zum Referenzobjekt von links nach rechts, und umgekehrt. Befindet sich nur ein charakteristisches gefilmtes Objekt 11 im aufgenommenen Bild, muss zumindest ein charakteristischer Hintergrund im aufgenommenen Bild vorliegen, um daraus einen stereoskopischen Frame des stereoskopischen Videofilms 2 zu erstellen. Mehrere gefilmte Objekte 11 sind vorteilhaft für den Gebrauch der Erfindung.

Alternativ kann die Bewegungsrichtung 27 des Videoaufnahmegeräts 4 relativ zu dem gefilmten Objekt 11 auch aus telemetrischen oder manuellen Daten ermittelt oder direkt empfangen werden. Dies können beispielsweise GPS-Koordinaten, die Daten von Drehmitteln oder von einem Transportmittel, die jeweils das Videoaufnahmegerät 4 drehen und/oder führen, oder die Daten von einer Fernbedienung der Drehmittel oder des Transportmittels sein.

Bei Feststellen einer Parallelität der Richtung der optischen Achse 17 des Einzelobjektivs 8 mit der Bewegungsrichtung 27 steuert die Datenverarbeitungseinheit 3 während eines Verfahrensschritts C Drehmittel 28 an, die eine Drehung der optischen Achse 17 in der Bewegungsebene 18 um die Drehachse 19 gegen den Uhrzeigersinn oder im Uhrzeigersinn durchführen. Dabei drehen die Drehmittel 28 die optische Achse 17 um zumindest 0,1 Winkelgrad, vorzugsweise um zumindest einem Winkelgrad, besonders vorzugsweise um zumindest fünf Winkelgrad.

Das Videoaufnahmegerät 4 kann beispielsweise an einer Drohne drehbar befestigt sein. Die Drehmittel können dabei durch eine Drehscheibe, die durch einen Elektromotor angetrieben wird, ausgebildet sein. Fliegt der Betrachter 26 nun die Drohne, und somit das Videoaufnahmegerät 4, beispielsweise auf eine Reihe von Bäumen zu und nimmt dabei den monoskopischen Videofilm 7 auf, so wählt die Datenverarbeitungseinheit 3 aus diesen Bäumen, von denen jeder jeweils ein gefilmtes Objekt 11 bildet, einen Baum als Referenzobjekt aus. Diesen Baum markiert die Datenverarbeitungseinheit 3 mit einem Punkt. Wird dieser Punkt während einer Abfolge von zumindest zwei aufgenommenen Frames 21 größer, ohne sich relativ zum Videoaufnahmegerät 4 nach links oder nach rechts zu bewegen, stellt die Datenverarbeitungseinheit 3 bei der zu diesem Zeitpunkt ermittelten Bewegungsinformation 14 eine Parallelität der optischen Achse 17 und der Bewegungsrichtung 27 des Videoaufnahmegeräts 4 fest. Per Datenverarbeitungseinheit 3, die ein entsprechendes Signal an den Elektromotor sendet, wird das Videoaufnahmegerät 4, und somit auch Einzelobjektiv 8 und optische Achse 17, nun sofort mittels der Drehscheibe um beispielsweise 5 Winkelgrad im Uhrzeigersinn um die Drehachse 19 des Videoaufnahmegeräts 4 gedreht. Somit ist die Parallelität der optischen Achse 17 mit der Bewegungsrichtung 27 nicht mehr gegeben.

Alternativ kann die Drehung der optischen Achse 17 des Einzelobjektivs 8 schon vor der Aufnahme des monoskopischen Videofilms 7 vorgenommen werden, wodurch die Parallelität der optischen Achse 17 mit der Bewegungsrichtung 27 des Videoaufnahmegeräts 4 von Anfang an nicht gegeben ist.

In den Verfahrensschritten D und E erstellt die Datenverarbeitungseinheit 3 den abzugebenden stereoskopischen Videofilm 2 laut einer ersten Verarbeitung 15, die schematisch in Figur 3 dargestellt ist. Dabei nützt die Erfindung die Verzerrung des jeweiligen aufgenommenen Bildes, die sich aufgrund der Drehung der optischen Achse 17 und der Krümmung der optischen Linse 9 ergibt. Die Verzerrung entsteht, wenn sich das Videoaufnahmegerät 4 entlang der Bewegungsrichtung 27 auf die zu filmenden Objekte 11 zu- oder wegbewegt. Durch den unterschiedlich langen Strahlengang des Lichts wird dem Beobachter 26 eine seitliche Bewegung und somit eine Bewegungsparallaxe suggeriert. Zusätzlich wird jedes gefilmte Objekt 11 nach seiner Aufnahme durch die Krümmung der Linse unterschiedlich stark verzerrt abgebildet.

Die Datenverarbeitungseinheit 3 verdoppelt in Verfahrensschritt D alle aufgenommenen vollständigen Frames 21 des monoskopischen Videofilms 7. Diese beiden Abfolgen von inhaltlich identen Frames 21 werden folgend in einem Verfahrensschritt E Seite-an-Seite, jeweils für das linke Auge 24 und das rechte Auge 25 des Betrachters 26, zeitlich zueinander verzögert, abgegeben. Die Verzögerung des monoskopischen Videofilms 7 für das linke Auge 24 oder das rechte Auge 25 des Betrachters 26 wird anhand der ermittelten Drehung der optischen Achse 17 durchgeführt. Wird die optische Achse 17, wie beispielsweise in Figur 3 dargestellt, im Uhrzeigersinn gedreht, wird in dem stereoskopischen Videofilm 2 der monoskopische Videofilm für das rechte Auge 25 des Betrachters 26 verzögert und der monoskopische Videofilm für das linke Auge 24 des Betrachters 26 unverzögert abgegeben. Bei einer Drehung der optischen Achse 17 gegen den Uhrzeigersinn wird in dem stereoskopischen Videofilm 2 der monoskopische Videofilm für das linke Auge 24 des Betrachters 26 verzögert und der monoskopische Videofilm für das rechte Auge 25 des Betrachters 26 unverzögert abgegeben.

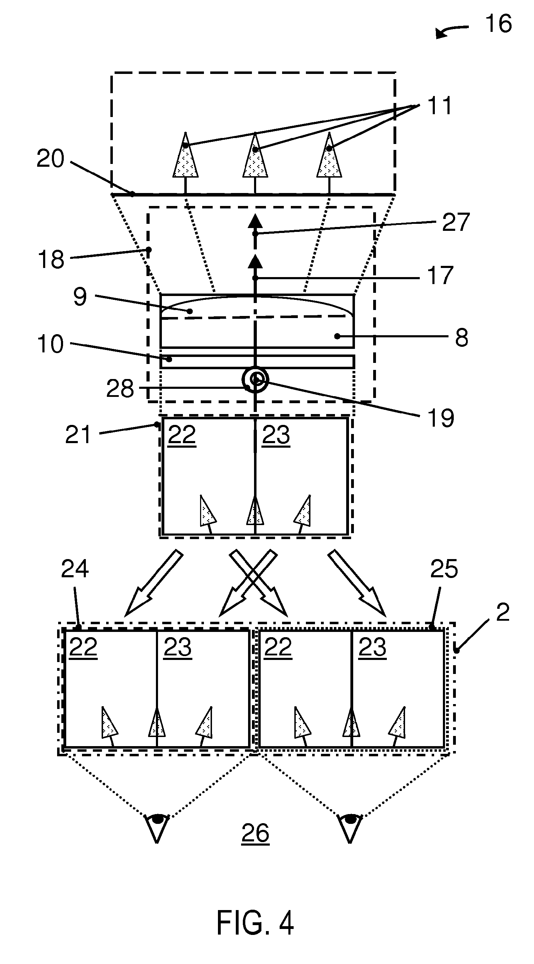

Ist eine Drehung der optische Achse 17 nicht möglich oder nicht gewünscht, erstellt die Datenverarbeitungseinheit 3 den abzugebenden stereoskopischen Videofilm 2 laut einer zweiten Verarbeitung 16, die schematisch in Figur 4 dargestellt ist. Auch hier muss die Bewegungsrichtung 27 während einer Abfolge von zumindest zwei aufeinanderfolgenden Frames 21 des monoskopischen Videofilms 7 in Richtung der optischen Achse 17 ausgebildet sein. Die optische Achse ist 17 hierbei nicht um die Drehachse 19 gedreht und fällt mit der Bewegungsrichtung 27 zusammen.

Bei dieser zweiten Verarbeitung 16 nützt die Erfindung die Verzerrung des jeweiligen aufgenommenen Bildes, die sich aufgrund der Krümmung der optischen Linse 9 ergibt. Die Verzerrung entsteht, wenn sich das Videoaufnahmegerät 4 entlang der Bewegungsrichtung 27 auf die zu filmenden Objekte 11 zu- oder wegbewegt. Durch den unterschiedlichen Strahlengang des Lichts innerhalb der optischen Linse 9, sowie an deren optischen Übergängen mit der Umgebungsluft, wird jedes gefilmte Objekt 11 nach seiner Aufnahme unterschiedlich stark verzerrt abgebildet. Das im jeweiligen Frame 21 gefilmte Objekt 11 wird umso stärker verzerrt abgebildet, je weiter seitlich entfernt, also rechts oder links, es sich in der Bewegungsebene 18, oder in einer Ebene parallel zur Bewegungsebene 18, von der, gegebenenfalls verlängerten, optischen Achse 17 befindet.

Die Datenverarbeitungseinheit 3 schneidet in dem Verfahrensschritt D die aufgenommenen Frames 21 des monoskopischen Videofilms 7 auf jeweils deren linke Hälfte 22 und deren rechte Hälfte 23 zu. In einem nächsten Schritt werden jeweils die linke Hälften 22 und die rechte Hälfte 23 all dieser Frames 21 kopiert und neu zusammengesetzt. Dabei bilden je eine linke Hälfte 22 und eine rechte Hälfte 23 jeweils einen vollständigen Frame eines monoskopischen Videofilms für das linke Auge 24 des Betrachters 26 sowie eines monoskopischen Videofilms für das rechte Auge 25 des Betrachters 26.

Diese beiden inhaltlich identen monoskopischen Videofilme werden folgend in Verfahrensschritt E Seite-an-Seite, jeweils für das linkes Auge 24 und das rechtes Auge 25 des Betrachters 26 abgegeben, und bilden den stereoskopischen Videofilm 2. Dabei werden jeweils die beiden äußeren Hälften eines jeden monoskopischen Videofilms des abzugebenden stereoskopischen Videofilms 2, also die linke Hälfte 22 des monoskopischen Videofilms für das linke Auge 24 des Betrachters 26 und die rechte Hälfte 23 des monoskopischen Videofilms für das rechte Auge 25 des Betrachters 26 verzögert abgegeben. Die beiden inneren Hälften eines jeden monoskopischen Videofilms des abzugebenden stereoskopischen Videofilms 2, also die rechte Hälfte 23 des monoskopischen Videofilms für das linke Auge 24 des Betrachters 26 und die linke Hälfte 22 des monoskopischen Videofilms für das rechte Auge 25 des Betrachters 26, werden hingegen unverzögert abgegeben.

Wie oben beschrieben, verzögert die Datenverarbeitungseinheit 3 in den Verfahrensschritten E der ersten Verarbeitung 15 oder der zweiten Verarbeitung 16, für den Fall der ersten Verarbeitung 15 den entsprechenden monoskopischen Videofilm des abzugebenden stereoskopischen Videofilms 2, beziehungsweise für den Fall der zweiten Verarbeitung 16 die entsprechenden Hälften der beiden monoskopischen Videofilme des abzugebenden stereoskopischen Videofilms 2, um einen bestimmten Betrag von Frames pro Sekunde. Die Größe des Betrages der Verzögerung in Frames pro Sekunde hängt dabei erstens von der Bewegungsgeschwindigkeit des Videoaufnahmegeräts 4 relativ zu dem Referenzobjekt ab, und zweitens wie stark der stereoskopische Effekt 12 des stereoskopischen Videofilms 2 sein soll. Dabei ist der Betrag der Verzögerung umso größer zu wählen, je größer die Bewegungsgeschwindigkeit des Videoaufnahmegeräts 4 ist, beziehungsweise je stärker der gewünschte stereoskopische Effekt 12 sein soll. Vorzugsweise beträgt die eingestellte Verzögerung in Frames pro Sekunde zwischen einem Drittel und zwei Drittel der Aufnahmegeschwindigkeit des Videoaufnahmegeräts 4, besonders vorzugsweise die Hälfte dieser Aufnahmegeschwindigkeit.

Die Wahl, um welchen Betrag in Frames pro Sekunde die verzögernd darzustellende Seite verzögert abgegeben werden soll, kann auch manuell vom Betrachter 26 getroffen werden.

Die Drehmittel 28 können als drehbarer 3-Achsenstabilisator 30 ausgebildet sein, der die optische Achse 17 in der Bewegungsebene 18, oder in einer Ebene parallel zur Bewegungsebene 18, um die Drehachse 19, oder um eine Achse parallel zur zu Drehachse 19, dreht. Dies hat den Vorteil, dass der aufgenommene monoskopische Videofilm 7, und folglich der abzugebende stereoskopische Videofilm 2, nicht "verwackelt" erscheint. Das Videoaufnahmegerät 4 kann über den drehbaren 3-Achsenstabilisator 30 geführt werden. Ist dieser drehbare 3-Achsenstabilisator 30 als tragbarer drehbarer 3-Achsenstabilisator ausgebildet, kann das Videoaufnahmegerät 4 während der Aufnahme des monoskopischen Videofilms 7 manuell geführt werden.

Besitzt das System 1 keinen drehbaren 3-Achsenstabilisator 30, kann das Videoaufnahmegerät 4 während der Aufnahme des monoskopischen Videofilms 7 auch von anderen Drehmitteln, beispielsweise der durch den Elektromotor angetriebenen Drehscheibe, geführt und/oder gedreht werden. Dabei korrigiert die Datenverarbeitungseinheit 3, beispielsweise mittels elektronischer Bildstabilisierung, den aufgenommenen monoskopischen Videofilm 7, damit der abzugebende stereoskopische Videofilm 2 nicht "verwackelt" erscheint.

Besitzt das System 1 keinen tragbaren drehbaren 3-Achsenstabilisator, kann das Videoaufnahmegerät 4 während der Aufnahme des monoskopischen Videofilms 7 auch direkt per Hand manuell, beispielsweise vom Betrachter 26, geführt werden. Dabei korrigiert die Datenverarbeitungseinheit 3, beispielsweise mittels elektronischer Bildstabilisierung, den aufgenommenen monoskopischen Videofilm 7, damit der abzugebende stereoskopische Videofilm 2 nicht "verwackelt" erscheint.

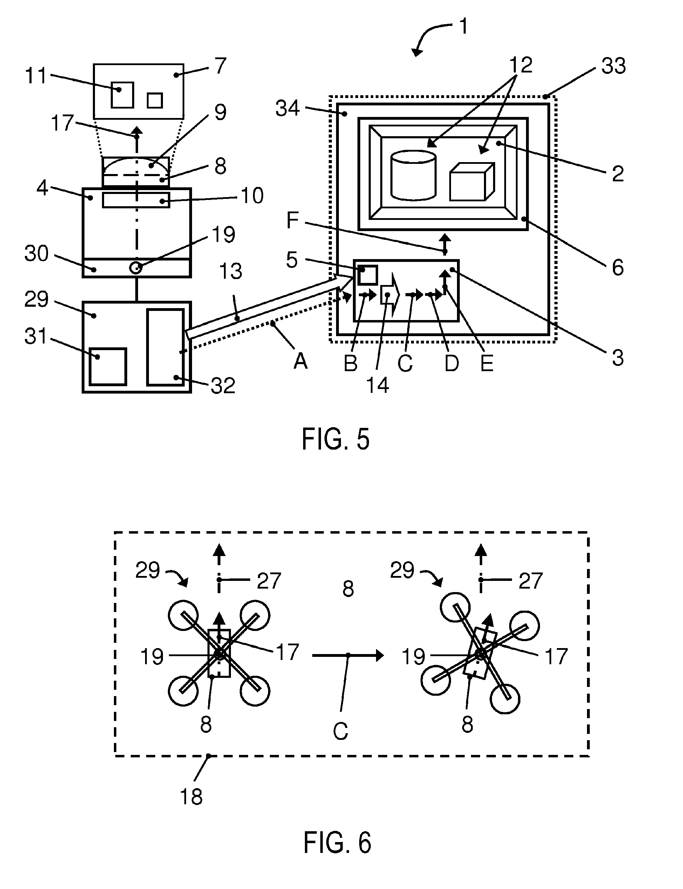

Figur 5 zeigt ein Blockschaltbild des erfindungsgemäßen Systems 1 zur Abgabe des stereoskopischen Videofilms 2 gemäß einem weiteren Ausführungsbeispiel der Erfindung. Das System 1 weist, zusätzlich zu dem in den Figuren 1 bis 4 dargestellten Ausführungsbeispiel, ein autonomes, unbemanntes Transportmittel 29, vorzugsweise eine Drohne, auf. Das Transportmittel 29 dient zur Aufnahme und zur Führung des Videoaufnahmegeräts 4. Das Videoaufnahmegerät 4 ist über einen drehbaren 3-Achsenstabilisator 30 an dem Transportmittel 29 befestigt. Das Transportmittel 29 weist weiters ein GPS-Modul 31 auf, damit die dem monoskopischen Videofilm 7 zugeordnete Bewegungsinformation 14 automatisch ermittelt werden kann. Alternativ kann die zugeordnete Bewegungsinformation 14 auch aus den Daten einer Fernsteuerung des Transportmittels 29 gewonnen werden. Ein mobiles Telekommunikationsgerät 33, vorzugsweise ein Smartphone oder mobiler Tablet-Computer, weist die Datenverarbeitungseinheit 3 und den Bildschirm der stereoskopischen Anzeigeeinheit 6 in einem Gehäuse 34 auf. Mit einer 3D-Brille oder mittels eines "Virtual Reality Headsets", in welches das Telekommunikationsgerät 33 zur Anzeige des stereoskopischen Videofilms 2 eingesteckt wird, kann der Betrachter 26 den stereoskopischen Videofilm 2 direkt auf dem mobilen Telekommunikationsgerät 33 ansehen.

In weiterer Folge verfährt die Datenverarbeitungseinheit 3 wie im, in den Figuren 1 bis 4 dargestellten, ersten Ausführungsbeispiel beschrieben, wobei die Flughöhe des unbemannten Transportmittels 29 Einfluss auf den Betrag der Verzögerung hat. Diese ist umso größer zu wählen, je größer die Flughöhe des unbemannten Transportmittels 29, beziehungsweise des Videoaufnahmegeräts 4, ist, um denselben stereoskopischen Effekt 12 zu erzielen.

Das Videoaufnahmegeräts 4 kann während der Bewegung des unbemannten Transportmittels 29 mit einer Geschwindigkeit, die langsamer zu wählen ist als ein Grenzwert, in der Bewegungsebene 18 im Uhrzeigersinn oder gegen den Uhrzeigersinn, beziehungsweise normal auf die der Bewegungsebene 18 nach oben oder nach unten gedreht werden, ohne den stereoskopischen Effekt 12 zu beeinträchtigen. Der Grenzwert ergibt sich dabei aus der Bewegungsgeschwindigkeit des Videoaufnahmegerätes 4 sowie aus dem Betrag der Verzögerung der entsprechenden Seite des stereoskopischen Videofilms 2.

Ist das Videoaufnahmegerät 4, beziehungsweise das Einzelobjektiv 8, nicht um die Drehachse 19 drehbar, so kann, wie in Figur 6 dargestellt, während Verfahrensschritt C auch das Transportmittel 29, das das Videoaufnahmegerät 4 führt oder aufweist, die Drehung der optischen Achse 17 durchführen. Dabei entspricht die Bewegungsrichtung des Transportmittels 29 der Bewegungsrichtung 27 des Videoaufnahmegeräts 4. Das Transportmittel 29 wird in der Bewegungsebene 18, oder in einer Ebene parallel zur Bewegungsebene 18, um die Drehachse 19, oder um eine Achse parallel zur Drehachse 19, unter Beibehaltung der Bewegungsrichtung 27 gedreht. Die Steuerung der Drehung des unbemannten Transportmittels 29 kann beispielsweise mittels der Datenverarbeitungseinheit 3 oder mittels der Fernsteuerung des Transportmittels 29 durchgeführt werden.

Ist das Videoaufnahmegerät 4 ebenfalls in das Gehäuse 34 des mobilen Telekommunikationsgerätes 33 integriert, so kann alternativ das Videoaufnahmegerät 4 während der Aufnahme des monoskopischen Videofilms 7 manuell an dem tragbaren drehbaren 3-Achsenstabilisator geführt werden. Der abgegebene stereoskopische Videofilm 2 kann hierbei im Wesentlichen in Echtzeit aus dem manuell aufgenommenen monoskopischen Videofilm 7 erstellt, abgegebenen und vom Betrachter 26 angesehen werden.

Es kann erwähnt werden, dass das erfindungsgemäße System 1 auch für die Abgabe eines stereoskopischen Bildes aus dem monoskopischen Videofilm 7 geeignet ist. Hierbei besteht das stereoskopische Bild aus zwei (einem linken für das linke Auge 24 des Betrachters 26 und einem rechten für das rechte Auge 25 des Betrachters 26) Seite-an-Seite abgegebenen Bildern. Das stereoskopische Bild wird hierbei durch einen sogenannten "Screenshot" aus dem stereoskopischen Videofilm 2 erzeugt, das heißt es wird ein bestimmter Frame des erstellten stereoskopischen Videofilms 2 an die stereoskopische Anzeigeeinheit 6 abgegeben.

Es kann weiters erwähnt werden, dass bei einem nicht drehbaren, oder aufgrund einer Fehlfunktion vorübergehend nicht drehbaren, Videoaufnahmegerät 4 ein System 1 zur Abgabe eines stereoskopischen Videofilms 2 verwendet werden kann, wobei das System 1 eine Datenverarbeitungseinheit 3 aufweist, die zum Empfangen und zur Verarbeitung von einem monoskopischen Videofilm 7 und zur Abgabe des stereoskopischen Videofilms 2, und die zum Empfangen oder zum Ermitteln einer dem monoskopischen Videofilm 7 zuzuordnenden Bewegungsinformation 14, und die zum Erstellen des stereoskopischen Videofilms 2 aus zwei inhaltlich identischen, zeitlich zueinander verzögerten, monoskopischen Videofilmen ausgebildet ist, wobei der monoskopische Videofilm 7 mit einem eine optische Achse 17 aufweisenden Einzelobjektiv 8 eines Videoaufnahmegeräts 4 des Systems 1 aufgenommenen wurde, und wobei die Bewegungsinformation 14 eine Bewegungsrichtung 27 des Videoaufnahmegeräts 4 relativ zu einem gefilmten Objekt 11 während einer Abfolge von zumindest zwei aufeinanderfolgenden Frames 21 des monoskopischen Videofilms 7 kennzeichnet dadurch gekennzeichnet, dass die Datenverarbeitungseinheit 3 zum Erstellen des stereoskopischen Videofilms 2 gemäß einer zweiten Verarbeitung 16 ausgebildet ist.

Dabei wählt die Datenverarbeitungseinheit 3 bei der zweiten Verarbeitung 16, die in Figur 4 dargestellt ist, die jeweils vollständigen Frames 21, das heißt die linke Hälfte 22 und die rechte Hälfte 23 der Frames 21, des monoskopischen Videofilms 7 zur Darstellung der zwei inhaltlich identischen, zeitlich zueinander verzögerten monoskopischen Videofilme als stereoskopischen Videofilm 2 aus, wobei die Datenverarbeitungseinheit 3 jeweils die linke Hälfte 22 und die rechte Hälfte 23 der Frames 21 des monoskopischen Videofilms 7 zur Darstellung des monoskopischen Videofilms für das linke Auge 24 und des monoskopischen Videofilms für das rechte Auge 25 des Betrachters 26 des stereoskopischen Videofilms 2 auswählt, und wobei die Datenverarbeitungseinheit 3 zum verzögerten Abgeben der linken Hälfte 22 und zum unverzögerten Abgeben der rechten Hälfte 23 der Frames des monoskopischen Videofilms das linke Auge 24 des Betrachters 26 des stereoskopischen Videofilms 2, und zum verzögerten Abgeben der rechten Hälfte 23 und zum unverzögerten Abgeben der linken Hälfte 22 der Frames des monoskopischen Videofilms das rechte Auge 25 des Betrachters 26 des stereoskopischen Videofilms 2, ausgebildet ist.

## Patentansprüche

1. System (1) zur Abgabe eines stereoskopischen Videofilms (2), wobei das System (1) eine Datenverarbeitungseinheit (3) aufweist, die
- zum Empfangen und zur Verarbeitung von einem monoskopischen Videofilm (7) und zur Abgabe des stereoskopischen Videofilms (2), und die
- zum Empfangen oder zum Ermitteln einer dem monoskopischen Videofilm (7) zuzuordnenden Bewegungsinformation (14), und die
- zum Erstellen des stereoskopischen Videofilms (2) aus zwei inhaltlich identischen, zeitlich zueinander verzögerten, monoskopischen Videofilmen ausgebildet ist,
wobei der monoskopische Videofilm (7) mit einem eine optische Achse (17) aufweisenden Einzelobjektiv (8) eines Videoaufnahmegeräts (4) des Systems (1) aufgenommenen wurde, und wobei die Bewegungsinformation (14) eine Bewegungsrichtung (27) des Videoaufnahmegeräts (4) relativ zu einem gefilmten Objekt (11) während einer Abfolge von zumindest zwei aufeinanderfolgenden Frames (21) des monoskopischen Videofilms (7) **kennzeichnet, dadurch gekennzeichnet, dass**
die Datenverarbeitungseinheit (3) bei festgestellter Parallelität der Richtung der optischen Achse (17) des Einzelobjektivs (8) mit der Bewegungsrichtung (27) zum Ansteuern von Drehmitteln (28) des Systems (1) ausgebildet ist, die zur Drehung der optische Achse (17) des Einzelobjektivs (8) in einer Bewegungsebene (18) um eine Drehachse (19) gegen den Uhrzeigersinn oder im Uhrzeigersinn ausgebildet sind, bis die Parallelität nicht mehr gegeben ist.

2. System (1) gemäß Anspruch 1, **dadurch gekennzeichnet, dass** die Drehmittel (28) zur Drehung der optischen Achse (17) des Einzelobjektivs (8) von zumindest 0,1 Winkelgrad, vorzugsweise von zumindest einem Winkelgrad, besonders vorzugsweise von zumindest fünf Winkelgrad, um die Drehachse (19) im Uhrzeigersinn oder gegen den Uhrzeigersinn ausgebildet sind, und dass die Datenverarbeitungseinheit (3) zum Erstellen des stereoskopischen Videofilms (2) gemäß einer ersten Verarbeitung (15) ausgebildet ist.

3. System (1) gemäß Anspruch 2, **dadurch gekennzeichnet, dass** die Datenverarbeitungseinheit (3) bei der ersten Verarbeitung (15) die jeweils vollständigen Frames (21) des monoskopischen Videofilms (7) zur Darstellung der zwei inhaltlich identischen, zeitlich zueinander verzögerten monoskopischen Videofilme als stereoskopischen Videofilm (2) auswählt, wobei die Datenverarbeitungseinheit (3) bei ausgewählter Drehung der optischen Achse (17) gegen den Uhrzeigersinn, beziehungsweise bei ausgewählter Drehung der optischen Achse (17) im Uhrzeigersinn, zum verzögerten Abgeben des monoskopischen Videofilms für das linke Auge (24), beziehungsweise für das rechte Auge (25), des Betrachters (26) des stereoskopischen Videofilms (2), und zum unverzögerten Abgeben des monoskopischen Videofilms für das rechte Auge (25), beziehungsweise für das linke Auge (24), des Betrachters (26) des stereoskopischen Videofilms (2) ausgebildet ist.

4. System (1) gemäß einem der vorhergehenden Ansprüche, **dadurch gekennzeichnet, dass** die Datenverarbeitungseinheit (3) zum Ansteuern der Drehmittel (28) und zum Erstellen des stereoskopischen Videofilms (2) aus zwei inhaltlich identischen, zeitlich zueinander verzögerten, monoskopischen Videofilmen ausgebildet ist, wobei die Auswahl der Drehung der optischen Achse (17) gegen den Uhrzeigersinn oder im Uhrzeigersinn, und somit die Auswahl der verzögerten Abgabe für entweder den monoskopischen Videofilm für das linke Auge (24) oder das rechte Auge (25) des Betrachters (26) des stereoskopischen Videofilms (2), sowie der Betrag des zeitlichen Ausmaßes dieser verzögerten Abgabe manuell durchführbar sind.

5. System (1) gemäß einem der vorhergehenden Ansprüche, **dadurch gekennzeichnet, dass** die Drehmittel (28) als drehbarer 3-Achsenstabilisator (30) ausgebildet sind, der zum Drehen der optischen Achse (17) um die Drehachse (19) und zum Halten und Stabilisieren des Videoaufnahmegeräts (4) während der Aufnahme des monoskopischen Videofilms (7) ausgebildet ist.

6. System (1) gemäß Anspruch 5, **dadurch gekennzeichnet, dass** der drehbare 3-Achsenstabilisator (30) als tragbarer drehbarer 3-Achsenstabilisator ausgebildet ist, der zur Aufnahme und zur manuellen Führung des Videoaufnahmegeräts (4) während der Aufnahme des monoskopischen Videofilms (7) ausgebildet ist.

7. System (1) gemäß Anspruch 5, wobei das System (1) ein autonomes, unbemanntes Transportmittel (29), vorzugsweise eine Drohne, aufweist, die zur Aufnahme und zur Führung des drehbaren 3-Achsenstabilisators (30), beziehungsweise des Videoaufnahmegeräts (4), ausgebildet ist.

8. System (1) gemäß einem der Ansprüche 1 bis 4, **dadurch gekennzeichnet, dass** ein autonomes, unbemanntes Transportmittel (29) zur Drehung der optische Achse (17) des Einzelobjektivs (8) um die Drehachse (19) ausgebildet ist.

9. System (1) gemäß einem der vorhergehenden Ansprüche, **dadurch gekennzeichnet, dass** die Datenverarbeitungseinheit (3) als mobiles Telekommunikationsgerät (33), wie beispielsweise ein Smartphone, oder als mobiler Tablet-Computer ausgebildet ist, wobei die Datenverarbeitungseinheit (3) gemeinsam mit dem Bildschirm der stereoskopischen Anzeigeeinheit (6) und dem Videoaufnahmegerät (4) in einem Gehäuse (34) vorgesehen ist.

10. System (1) gemäß Anspruch 9, **dadurch gekennzeichnet, dass** der tragbare drehbare 3-Achsenstabilisator zur Aufnahme und zur manuellen Führung des Gehäuses (34) während der Aufnahme des monoskopischen Videofilms (7) ausgebildet ist.

11. System (1) gemäß einem der Ansprüche 2 bis 10, **dadurch gekennzeichnet, dass** die Datenverarbeitungseinheit (3) unabhängig von der Bewegungsrichtung (27) zum Ansteuern der Drehmittel (28) und zum Erstellen des stereoskopischen Videofilms (2) aus zwei inhaltlich identischen, zeitlich zueinander verzögerten, monoskopischen Videofilmen ausgebildet ist, wobei die Datenverarbeitungseinheit (3) nach abgeschlossener Drehung der optischen Achse (17) des Einzelobjektivs (8) von zumindest 0,1 Winkelgrad, vorzugsweise von zumindest einem Winkelgrad, besonders vorzugsweise von zumindest fünf Winkelgrad, um die Drehachse (19), zum Erstellen des stereoskopischen Videofilms (2) aus dem nach abgeschlossener Drehung der optischen Achse (17) des Einzelobjektivs (8) aufgenommenen monoskopischen Videofilm (7) gemäß der ersten Verarbeitung (15) ausgebildet ist.

12. Verfahren zur Herstellung und Wiedergabe eines stereoskopischen Videofilms (2) aus einem, mit einem Videoaufnahmegerät (4), aufweisend ein durch Drehmittel (28) drehbares Einzelobjektiv (8) mit einer optischen Achse (17), aufgenommenen, monoskopischen Videofilm (7), aufweisend die Verfahrensschritte:
A) Empfangen des monoskopischen Videofilms (7);
B) Ermitteln einer dem monoskopischen Videofilm (7) zuzuordnenden Bewegungsinformation (14), die eine Bewegungsrichtung (27) des Videoaufnahmegeräts (4) relativ zu einem gefilmten Objekt (11) während einer Abfolge von zumindest zwei aufeinanderfolgenden Frames (21) des monoskopischen Videofilms (7) kennzeichnet;
C) Bei Festgestellter Parallelität der Richtung der optischen Achse (17) des Einzelobjektivs (8) mit der Bewegungsrichtung (27) des Videoaufnahmegeräts (4), Ansteuern der Drehmittel (28) zur Drehung der optischen Achse (17) des Einzelobjektivs (8) in einer Bewegungsebene (18) um eine Drehachse (19) gegen den Uhrzeigersinn oder im Uhrzeigersinn, bis die Parallelität nicht mehr gegeben ist;
D) Erstellen zweier, inhaltlich identischer, monoskopischer Videofilme des abzugebenden stereoskopischen Videofilms (2) aus dem monoskopischen Videofilm (7);
E) Verzögern eines der beiden monoskopischen Videofilme des abzugebenden stereoskopischen Videofilms (2);
F) Abgabe des in den Verfahrensschritten A)-E) hergestellten stereoskopischen Videofilms (2) an eine stereoskopische Anzeigeeinheit (6).
